# EUROPÄISCHE PATENTSCHRIFT

(11) **EP 2 101 955 B1**
(45) Veröffentlichungstag und Bekanntmachung des Hinweises auf die Patenterteilung: **17.01.2018**
(21) Anmeldenummer: 07821797.3
(22) Anmeldetag: 24.10.2007
(51) Int. Cl.: B25D 11/00, B25D 16/00, B25D 17/00, F16J 15/32, F16C 17/02, F16C 35/02

(54) **WERKZEUGMASCHINE MIT EINEM MIT EINER VERDREHSICHERUNG VERSEHENEN GLEITLAGER**
MACHINE TOOL HAVING A SLIDING BEARING WHICH IS PROVIDED WITH AN ANTI-ROTATION SAFEGUARD
MACHINE-OUTIL AVEC UN PALIER LISSE POURVU D'UN BLOCAGE EN ROTATION

(30) Priorität: 20.12.2006 DE 102006060319
(43) Veröffentlichungstag der Anmeldung: 23.09.2009
(73) Patentinhaber: Robert Bosch GmbH, 70442 Stuttgart (DE)
(72) Erfinder: KUHNLE, Axel, 71691 Freiberg A. N. (DE); BRAUN, Willy, 72149 Neustetten (DE)
(86) Internationale Anmeldenummer: PCT/EP2007/061434
(87) Internationale Veröffentlichungsnummer: WO 2008/074554

(56) Entgegenhaltungen:
- EP-A- 1 561 547
- DE-A1- 3 239 283
- DE-A1- 19 921 988
- GB-A- 1 331 506
- JP-A- 55 107 161
- JP-A- 2002 323 139
- US-A- 3 170 523

## Beschreibung

Die Erfindung betrifft eine Elektrohandwerkzeugmaschine gemäß dem Oberbegriff des unabhängigen Anspruchs 1, insbesondere einen Bohr- oder Meißelhammer, mit einer Antriebswelle, insbesondere einem Hammerrohr, die in einem mit einer Verdrehsicherung versehenen Gleitlager gelagert ist, an das sich eine Dichtungshülse zumindest Bereichsweise axial anschließt.

### Stand der Technik

Elektrohandwerkzeugmaschinen der Eingangs genannten Art sind bekannt. Zur Lagerung einer Antriebswelle, die ein Werkzeug der Elektrohandwerkzeugmaschine betätigt, wird ein Gleitlager verwendet, welches mit einer Verdrehsicherung versehen ist, damit sich nur die Antriebswelle dreht und nicht das Gleitlager selbst. Es sind hierbei Gleitlager bekannt, die formschlüssig, mittels Radialvorsprüngen an einem feststehenden Element gegen ein Verdrehen gesichert sind.
Zur Abdichtung der Elektrohandwerkzeugmaschine nach außen schließt sich eine Dichtungshülse zumindest Bereichsweise axial an das Gleitlager an. Die Dichtungshülse dient im Wesentlichen zur Aufnahme eines oder mehrerer Dichtmittel, wie zum Beispiel ein Radialwellendichtring und/oder ein O-Ring. Das Gleitlager und die Dichtungshülse werden in der Regel mittels Sicherungsringen axial fixiert. Die Dichtungshülse ist lediglich durch Kraftschluss gegen ein Verdrehen gesichert, sodass es geschehen kann, dass sich die Dichtungshülse gegen das Gleitlager verdreht. Die GB 1 331 506 offenbart eine Elektrohandwerkzeugmaschine mit den Merkmalen des Oberbegriffs des unabhängigen Anspruchs 1.

### Offenbarung der Erfindung

Erfindungsgemäß wird eine Elektrohandwerkzeugmaschine mit den Merkmalen des unabhängigen Anspruchs 1 geschaffen. Bei dieser Elektrohandwerkzeugmaschine ist vorgesehen, dass die Dichtungshülse verdrehsicher angeordnet und drehfest mit dem Gleitlager verbunden ist. Dadurch bildet die mit dem Gleitlager drehfest verbundene Dichtungshülse eine Verdrehsicherung für das Gleitlager. Hierbei ist es nicht notwendig, dass das Gleitlager selbst verdrehsicher gelagert ist. Das Gleitlager wird erfindungsgemäß über die Dichtungshülse gegen ein Verdrehen gesichert. Dadurch ergibt sich der Vorteil, dass das Gleitlager einfacher und kostengünstiger herstellbar ist, da es symmetrisch und gewichtsoptimiert ausgebildet werden kann, wobei das Gleitlager vorteilhafterweise als Sinter-Gleitlager ausgebildet ist. Die Elektrohandwerkzeugmaschine der Erfindung weist ein Gehäuse auf, wobei das Gleitlager und die Dichtungshülse in dem Gehäuse gelagert sind. Erfindungsgemäß ist die Dichtungshülse in dem Gehäuse verdrehsicher angeordnet. Durch die drehfeste Verbindung des Gleitlagers mit der Dichtungshülse ist somit auch das Gleitlager in dem Gehäuse verdrehsicher angeordnet. Da die durch die Dichtungshülse gebildete Verdrehsicherung mit dem Gehäuse nunmehr näher an einer die Antriebswelle aufnehmenden Gehäuseöffnung des Gehäuses der Elektrohandwerkzeugmaschine angeordnet ist, kann die Verdrehsicherung einfacher und kostengünstiger hergestellt und montiert werden. In einer bevorzugten Ausführungsform der Erfindung weist die Dichtungshülse mindestens einen, in eine Radialaussparung des Gehäuses eingreifenden Radialvorsprung auf. Von der Dichtungshülse ragt also vorteilhafterweise radial ein (Radial-)Vorsprung vor, der durch das Eingreifen in eine Radialaussparung des Gehäuses ein Verdrehen der Dichtungshülse um ihre Achse verhindert, wobei eine formschlüssige Verdrehsicherung realisiert wird. Zeckmäßigerweise ist - im Querschnitt gesehen - der Radialvorsprung im Wesentlichen so breit wie die Radialaussparung des Gehäuses ausgebildet, wobei vorteilhafterweise ein Presssitz realisiert wird, sodass zwischen der Dichtungshülse und dem Gehäuse ein möglichst kleines oder kein Spiel in Verdrehrichtung besteht. Vorteilhafterweise ist die Radialaussparung des Gehäuses randoffen ausgebildet, sodass die Dichtungshülse mit ihrem Radialvorsprung axial in das Gehäuse beziehungsweise die Radialaussparung eingeführt werden kann. Prinzipiell ist es natürlich auch denkbar, dass der Radialvorsprung an dem Gehäuse und die Radialaussparung in der Dichtungshülse ausgebildet ist. In einer weiteren bevorzugten Ausführungsform der Erfindung weist die Dichtungshülse mindestens einen, in eine Aussparung des Gleitlagers eingreifenden Axialvorsprung auf. Hierdurch wird eine Verdrehsicherung zwischen der Dichtungshülse und dem Gleitlager realisiert. Der Axialvorsprung der Dichtungshülse wird bei der Montage in die Aussparung des Gleitlagers (axial) eingeschoben. Vorteilhafterweise entspricht der Querschnitt der Aussparung im Wesentlichen dem Querschnitt des Axialvorsprungs, wobei besonders bevorzugt der Axialvorsprung und die Aussparung so breit ausgebildet sind, dass in Verdrehrichtung zwischen der Dichtungshülse und dem Gleitlager kein Spiel besteht. Vorteilhafterweise weist das Gleitlager gleichmäßig über seinen Umfang verteilt angeordnet derartige Aussparungen auf. Dadurch lässt sich ein symmetrisches und gewichtsoptimiertes Gleitlager realisieren. Prinzipiell ist es natürlich auch denkbar, dass das Gleitlager den mindestens einen Axialvorsprung und die Dichtungshülse die entsprechende Aussparung aufweist. Natürlich sind auch andere Möglichkeiten zum drehfesten Verbinden der Dichtungshülse mit dem Gleitlager, so kann die drehfeste Verbindung beziehungsweise Verdrehsicherung beispielsweise durch Verkleben, Verschrauben und/oder Verschweißen realisiert werden.
In einer bevorzugten Ausführungsform der Erfindung ist die/jede Aussparung als Axialaussparung ausgebildet. Das hat zur Folge, dass die Innenseite des Gleitlagers, die mit der Antriebswelle in Berührungskontakt steht, beziehungsweise auf der die Antriebswelle gelagert ist, und die Außenseite, die mit dem Gehäuse der Elektrohandwerkzeugmaschine in Berührungskontakt steht, jeweils (durchgehend) kreisförmig ausgebildet sind, sodass jeweils eine größtmögliche, nicht-unterbrochene Kontaktfläche zwischen Gleitlager und Antriebswelle beziehungsweise Gehäuse gewährleistet ist.
Vorteilhafterweise ist die/jede Aussparung beziehungsweise die/jede Axialaussparung als Durchbruch ausgebildet. Dies erleichtert sowohl die Herstellung als auch den Montageprozess und ist zugleich Kosten sparend.

Darüber hinaus ermöglicht dies eine noch weiter gewichtsoptimierte Gestaltung des Gleitlagers. Gemäß der Erfindung ist zwischen der Dichtungshülse und dem Gleitlager ein Dichtungsring, insbesondere O-Ring, angeordnet. Der Dichtungsring dient dabei zur Abdichtung der Dichtungshülse gegen das Gehäuse und liegt vorteilhafterweise auf einer Schulter der Dichtungshülse auf, sodass er radial und zumindest in eine Richtung axial von der Dichtungshülse gehalten wird. Vorzugsweise wird der Dichtungsring in einer Richtung axial gegen das Gleitlager gedrückt, und somit zwischen Dichtungshülse und Gleitlager gehalten. Da die Dichtungshülse drehfest mit dem Gleitlager verbunden ist, erfährt der Dichtungsring keine Relativbewegung zu der Dichtungshülse, dem Gleitlager oder dem Gehäuse der Elektrohandwerkzeugmaschine, wodurch seine Lebensdauer erhöht wird. Gemäß der Erfindung ist der Dichtungsring als A-Schlag-Dämpfungsring ausgebildet. Ist die Antriebswelle als ein Hammerrohr ausgebildet, nimmt der als A-Schlag-Dämpfungsring ausgebildete Dichtungsring die im Leerlauf eines Hammers eines Schlagwerks der Elektrohandwerkzeugmaschine entstehenden Schlagimpulse, die über das Hammerrohr und das Gleitlager auf das Gehäuse der Elektrohandwerkzeugmaschine übertragen werden, auf und dämpft diese ab. Durch diese vorteilhafte Doppelfunktion des Dichtungsrings wird der Komfort für den Bediener der Handwerkzeugmaschine weiter erhöht. In einer bevorzugten Ausführungsform der Erfindung ist ein Radialwellendichtring in einer Radialwellendichtring-Aufnahme der Dichtungshülse angeordnet. Die Dichtungshülse weist also vorteilhafterweise eine Radialwellendichtring-Aufnahme auf, in die ein Radialwellendichtring einbringbar ist, wobei der Radialwellendichtring dichtend an der Antriebswelle und der Dichtungshülse anliegt. Zusammen mit dem Dichtungsring bewirkt der Radialwellendichtring die vollständige Abdichtung des Gehäuses der Elektrohandwerkzeugmaschine nach Außen. In einer bevorzugten Ausführungsform der Erfindung bilden die Dichtungshülse, der Radialwellendichtring, der Dichtungsring und das Gleitlager eine Montageeinheit.

Dichtungshülse, Radialwellendichtring, Dichtungsring beziehungsweise A-Schlag-Dämpfungsring, und Gleitlager können also vormontiert und als Montageeinheit montiert werden. Dadurch wird die Endmontage der Elektrohandwerkzeugmaschine beschleunigt und vereinfacht. Zweckmäßigerweise wird zuerst der Radialwellendichtring in die Dichtungshülse beziehungsweise die Radialwellendichtring-Aufnahme der Dichtungshülse eingepresst. Anschließend wird der Dichtungsring und danach das Gleitlager auf die Dichtungshülse aufgeschoben. Abschließend wird die beschriebene Montageeinheit über die Antriebswelle beziehungsweise das Hammerrohr in das Gehäuse der Elektrohandwerkzeugmaschine eingeführt. In dem Gehäuse wird die Montageeinheit mittels zwei Sicherungsringen axial gesichert.

### Kurze Beschreibung der Zeichnungen

Im Folgenden soll die Erfindung anhand einiger Figuren näher erläutert werden.
Dazu zeigen
- Figur 1: ein Ausführungsbeispiel der Erfindung in einer Längsschnittdarstellung und
- Figur 2: eine erfindungsgemäße Montageeinheit in einer perspektivischen Explosionsdarstellung.

### Ausführungsform der Erfindung

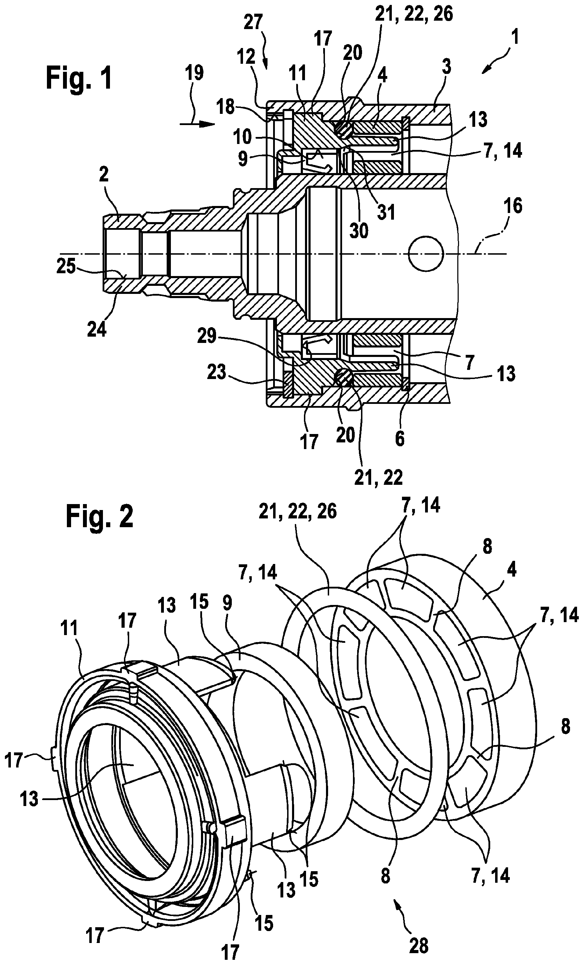

Die Figur 1 zeigt in einem Ausführungsbeispiel der Erfindung einen Ausschnitt einer Elektrohandwerkzeugmaschine 1 in einer Längsschnittdarstellung. Die als Bohrhammer ausgebildete Elektrohandwerkzeugmaschine 1 weist ein Hammerrohr 2 auf, das in einem Gehäuse 3 der Elektrohandwerksmaschine 1 drehbar gelagert ist. Dazu ist in dem Gehäuse 3 ein Gleitlager 4 in einer Gleitlageraufnahme 5 des Gehäuses 3 angeordnet. In dem Gleitlager 4 ist das Hammerrohr 2 gelagert. Ein in das Gehäuse 3 eingebrachter Sicherungsring 6 stützt das Gleitlager 4 axial, sodass es nicht weiter in das Gehäuse 3 in Richtung des Pfeils 19 eingeschoben werden kann.

Wie in der perspektivischen Explosionsdarstellung der Figur 2 dargestellt, weist das Gleitlager 4, das im Wesentlichen kreisringförmig ausgebildet ist, mehrere über seinen Umfang gleichmäßig verteilt angeordnete Axialaussparungen 7 auf. Diese sind im Wesentlichen kreisringabschnittförmig ausgebildet und werden durch radial verlaufende Stege 8 voneinander getrennt.

Zur Abdichtung des Gehäuses 3 der Elektrohandwerkzeugmaschine 1 ist ein Radialwellendichtring 9 auf dem Hammerrohr 2 angeordnet. Da der Spalt zwischen dem Hammerrohr 2 und dem Gehäuse 3 in der Regel zu groß für einen Standardradialwellendichtring ist, wird dieser in einer Radialwellendichtring-Aufnahme 10 einer Dichtungshülse 11 gehalten, die sich axial an das Gleitlager 4 - in Richtung eines Endes 12 des Gehäuses 3 - zumindest Bereichsweise anschließt, wie in der Figur 1 dargestellt. Die Dichtungshülse 11 weist mehrere über ihren Umfang verteilt angeordnete Axialvorsprünge 13 auf, die in die Axialaussparungen 7, die vorteilhafterweise als Axialdurchbrüche 14 ausgebildet sind, eingreifen. Die Axialvorsprünge 13 weisen an ihrem freien Ende vorteilhafterweise Einführphasen 15 auf, die als Einführhilfe bei der Montage dienen. Im Wesentlichen sind die Axialvorsprünge 13 derart ausgebildet, dass sie mit den Axialaussparungen 7 beziehungsweise Axialdurchbrüchen 14 einen Presssitz bilden, sodass zwischen der Dichtungshülse 11 und dem Gleitlager 4 in Verdrehrichtung um ihre gemeinsame Achse 16 kein Spiel besteht.

Weiterhin weist die Dichtungshülse 11 vier über Ihren Umfang gleichmäßig verteilt angeordnete Radialvorsprünge 17 auf, die in randoffene Radialaussparungen 18 des Gehäuses 3 eingreifen. Wobei die Dichtungshülse 11, ebenso wie das Gleitlager 4, in Richtung des Pfeils 19 mit ihren Radialvorsprüngen 17 in das Gehäuse 3 beziehungsweise die Radialaussparungen 18 geschoben ist. Zwischen dem (Axial-)Bereich der Dichtungshülse 11, der die Radialvorsprünge 17 aufweist und dem (Axial-) Bereich mit den Axialvorsprüngen 13, ist eine Schulter 20 vorgesehen, die von einer radial angeordneten Seitenfläche und einer dazu senkrecht angeordneten Oberfläche gebildet wird. Auf der Schulter 20 ist ein als O-Ring 21 ausgebildeter Dichtungsring 22 aufgeschoben. Die Dichtungshülse 11 ist dabei soweit in Richtung des Pfeils 19 an das Gleitlager 4 herangeschoben, dass der O-Ring 21 zwischen Dichtungshülse 11 beziehungsweise Schulter 20 und dem Gleitlager 4 eingeklemmt ist. Der O-Ring 21 dient dabei zum Abdichten des Gehäuses 3 der Elektrohandwerkzeugmaschine 1 ebenso wie der Radialwellendichtring 9. Zum axialen Fixieren der Dichtungshülse 11 in dem Gehäuse 3 ist ein weiterer Sicherungsring 23 in das Gehäuse 3 eingebracht. Somit werden Dichtungshülse 11, Radialwellendichtring 9, O-Ring 21 und das Gleitlager 4 zwischen den Sicherungsringen 6 und 23 gehalten. Das Hammerrohr 2 weist weiterhin an seinem freien Ende 24 eine Werkzeugaufnahme 25 zum Aufnehmen eines Werkzeugsschafts eines Werkzeugs auf.

Der Dichtungsring 22 beziehungsweise der O-Ring 21 ist vorteilhafterweise derart ausgebildet, dass er zusätzlich als A-Schlag-Dämpfungsring 26 wirkt, sodass im Betrieb der Elektrohandwerksmaschine 1 A-Schläge, die im Leerlauf eines Hammers eines Schlagwerks der Elektrohandwerkmaschine 1 über das Hammerrohr 2 und das Gleitlager 4 auf das Gehäuse 3 übertragen werden, abgedämpft werden. Der so ausgebildete Dichtungsring 22 verbessert sowohl den Leerlauf und die Vibrationen der Elektrohandwerkzeugmaschine 1, sowie die Lebensdauer ihrer Bauteile.

Aufgrund der in die Axialdurchbrüche 14 ragenden Axialvorsprünge 13 der Dichtungshülse 11, sind diese und das Gleitlager 4 drehfest miteinander verbunden. Da die Dichtungshülse 11 weiterhin mittels der Radialvorsprünge 17 in dem Gehäuse 3 verdrehsicher angeordnet ist, ist auch das Gleitlager 4 verdrehgesichert. Die Radialvorsprünge 17 der Dichtungshülse 11 bilden somit zusammen mit den Radialaussparungen 18 eine Verdrehsicherung 27, die sowohl für die Dichtungshülse 11 als auch für das Gleitlager 4 wirkt. Da die Dichtungshülse 11 und das Gleitlager 4 verdrehfest miteinander verbunden sind, wirken auf den O-Ring 21 keine Relativbewegungen, die sich negativ auf die Lebensdauer des O-Rings 21 auswirken könnten. Das Gleitlager 4 welches vorteilhafter Weise als Sinter-Gleitlager ausgebildet ist, kann aufgrund der erfindungemäßen Verdrehsicherung 27 symmetrisch und gewichtsoptimiert ausgeführt werden, wodurch der Herstellungs- und der Montageprozess des Gleitlagers 4 vereinfacht wird und die Herstellungskosten verringert werden.

Die Figur 2 zeigt den Dichtungsring 11, den Radialwellendichtring 9, den O-Ring 21 und das Gleitlager 4, die eine Gleitlager-Dichtungseinheit beziehungsweise eine Montageeinheit 28 bilden in einer perspektivischen Explosionsdarstellung. Die Montageeinheit 28 kann vormontiert werden, wobei zunächst der Radialwellendichtring 9 in die Dichtungshülse 11 beziehungsweise die Radialwelledichtring-Aufnahme 10 der Dichtungshülse 11 eingepresst wird. Dazu weist die Radialwellendichtring-Aufnahme 10 einen ersten Axialanschlag 29 und einen zweiten Axialanschlag 30 auf, zwischen denen der Radialdichtring 9 aufgenommen wird. Dabei wird der Radialwellendichtring 9 über eine kleine, die Rückseite des Axialanschlags 30 bildende Schräge 31 geschoben.

Anschließend wird der O-Ring 21/A-Schlag-Dämpfungsring 26 auf die Schulter 20 der Dichtungshülse 11 aufgeschoben und anschließend wird das Gleitlager 4 mit seinen Axialdurchbrüchen 14 auf die Axialvorsprünge 13 der Dichtungshülse 11 aufgeschoben. Diese so gebildete Montageeinheit 28 wird anschließend in das Gehäuse 3 bis zu dem Sicherungsring 6 eingeschoben. Zuletzt wird der Sicherungsring 23 in das Gehäuse 3 eingebracht, sodass die Montageeinheit 28 im Gehäuse 3 in beide Richtungen axial gesichert ist.

Durch die vorteilhafte, vorstehend genannte Ausbildung ist ein kompakter und kostengünstiger Aufbau der Gleitlager-Dichtungseinheit möglich.

## Patentansprüche

1. Elektrohandwerkzeugmaschine, insbesondere Bohr- oder Meißelhammer, mit einem Gehäuse (3), mit einer Antriebswelle, insbesondere einem Hammerrohr, die in einem mit einer Verdrehsicherung versehenen Gleitlager (4) gelagert ist, an das sich eine Dichtungshülse (11) zumindest Bereichsweise axial anschließt, wobei die Dichtungshülse (11) verdrehsicher im Gehäuse (3) angeordnet und drehfest mit dem Gleitlager (4) verbunden ist, **dadurch gekennzeichnet, dass** zwischen der Dichtungshülse (11) und dem Gleitlager (4) ein Dichtungsring (22), insbesondere O-Ring (21), angeordnet ist, der als A-Schlag-Dämpfungsring (26) ausgebildet ist.

2. Elektrohandwerkzeugmaschine nach Anspruch 1, **dadurch gekennzeichnet, dass** die Dichtungshülse (11) mindestens einen, in eine Radialaussparung (18) des Gehäuses (3) eingreifenden Radialvorsprung (17) aufweist.

3. Elektrohandwerkzeugmaschine nach einem der vorhergehenden Ansprüche, **dadurch gekennzeichnet, dass** die Dichtungshülse (11) mindestens einen, in eine Aussparung des Gleitlagers (4) eingreifenden Axialvorsprung (13) aufweist.

4. Elektrohandwerkzeugmaschine nach einem der vorhergehenden Ansprüche, **dadurch gekennzeichnet, dass** die Aussparung (7) als Axialaussparung (7) ausgebildet ist.

5. Elektrohandwerkzeugmaschine nach einem der vorhergehenden Ansprüche, **dadurch gekennzeichnet, dass** die Aussparung (7) als Durchbruch (14) ausgebildet ist.

6. Elektrohandwerkzeugmaschine nach einem der vorhergehenden Ansprüche, **dadurch gekennzeichnet, dass** ein Radialwellendichtring (9) in einer Radialwellendichtring-Aufnahme (10) der Dichtungshülse (11) angeordnet ist.

7. Elektrohandwerkzeugmaschine nach einem der vorhergehenden Ansprüche, **dadurch gekennzeichnet, dass** die Dichtungshülse (11), der Radialwellendichtring (9), der Dichtungsring (22) und das Gleitlager (4) eine Montageeinheit (28) bilden.

8. Elektrohandwerkzeugmaschine nach einem der vorhergehenden Ansprüche, **dadurch gekennzeichnet, dass** der Dichtungsring (22) axial gegen das Gleitlager (4) gedrückt wird.

## Claims

1. Portable electric power tool, in particular hammer drill or chipping hammer, having a housing (3), having a drive shaft, in particular a hammer tube, which is mounted in a plain bearing (4) provided with a rotation lock, said plain bearing (4) being axially adjoined at least regionally by a sealing sleeve (11), wherein the sealing sleeve (11) is arranged in a rotation-proof manner in the housing (3) and is connected to the plain bearing (4) in a rotationally fixed manner, **characterized in that**, between the sealing sleeve (11) and the plain bearing (4), a sealing ring (22), in particular an 0-ring (21), is arranged, which is configured as an A-impact damping ring (26).

2. Portable electric power tool according to Claim 1, **characterized in that** the sealing sleeve (11) has at least one radial protrusion (17) engaging in a radial cutout (18) in the housing (3).

3. Portable electric power tool according to either of the preceding claims, **characterized in that** the sealing sleeve (11) has at least one axial protrusion (13) engaging in a cutout in the plain bearing (4).

4. Portable electric power tool according to one of the preceding claims, **characterized in that** the cutout (7) is configured as an axial cutout (7).

5. Portable electric power tool according to one of the preceding claims, **characterized in that** the cutout (7) is configured as an aperture (14).

6. Portable electric power tool according to one of the preceding claims, **characterized in that** a radial-shaft seal ring (9) is arranged in a radial-shaft seal-ring receptacle (10) of the sealing sleeve (11).

7. Portable electric power tool according to one of the preceding claims, **characterized in that** the sealing sleeve (11), the radial-shaft seal ring (9), the sealing ring (22) and the plain bearing (4) form an assembly unit (28).

8. Portable electric power tool according to one of the preceding claims, **characterized in that** the sealing ring (22) is pressed axially against the plain bearing (4).

## Revendications

1. Machine-outil électrique à main, en particulier marteau perforateur ou marteau-piqueur, comprenant un boîtier (3), avec un arbre d'entraînement, en particulier un tube de marteau, qui est supporté dans un palier lisse (4) pourvu d'un blocage en rotation, auquel se raccorde au moins en partie axialement une douille d'étanchéité (11), la douille d'étanchéité (11) étant disposée de manière bloquée en rotation dans le boîtier (3) et étant connectée de manière solidaire en rotation au palier lisse (4), **caractérisée en ce qu'**entre la douille d'étanchéité (11) et le palier lisse (4) est disposée une bague d'étanchéité (22), en particulier un joint torique (21), qui est réalisée sous forme de bague d'amortissement aux chocs axiaux (chocs A) (26).

2. Machine-outil électrique à main selon la revendication 1, **caractérisée en ce que** la douille d'étanchéité (11) présente au moins une saillie radiale (17) s'engageant dans un évidement radial (18) du boîtier (3).

3. Machine-outil électrique à main selon l'une quelconque des revendications précédentes, **caractérisée en ce que** la douille d'étanchéité (11) présente au moins une saillie axiale (13) s'engageant dans un évidement du palier lisse (4).

4. Machine-outil électrique à main selon l'une quelconque des revendications précédentes, **caractérisée en ce que** l'évidement (7) est réalisé sous forme d'évidement axial (7).

5. Machine-outil électrique à main selon l'une quelconque des revendications précédentes, **caractérisée en ce que** l'évidement (7) est réalisé sous forme de perçage (14).

6. Machine-outil électrique à main selon l'une quelconque des revendications précédentes, **caractérisée en ce qu'**une bague d'étanchéité radiale pour arbre (9) est disposée dans un logement de bague d'étanchéité radiale pour arbre (10) de la douille d'étanchéité (11).

7. Machine-outil électrique à main selon l'une quelconque des revendications précédentes, **caractérisée en ce que** la douille d'étanchéité (11), la bague d'étanchéité radiale pour arbre (9), la bague d'étanchéité (22) et le palier lisse (4) constituent une unité de montage (28).

8. Machine-outil électrique à main selon l'une quelconque des revendications précédentes, **caractérisée en ce que** la bague d'étanchéité (22) est pressée axialement contre le palier lisse (4).
